# EUROPEAN PATENT APPLICATION

(11) **EP 3 590 840 A1**
(43) Date of publication of application: **08.01.2020**
(21) Application number: 19181024.1
(22) Date of filing: 18.06.2019
(51) Int. Cl.: B64D 15/04, F02C 7/047

(54) **SEGREGATED ANTI-ICE DUCT CHAMBER**

(30) Priority: 05.07.2018 US 201816027535
(71) Applicant: Rohr, Inc., Chula Vista, CA 91910-2098 (US)
(72) Inventor: PRETTY, Michael Sean, Jamul, CA 91935 (US); SHANER, Kristopher B., San Diego, CA 92126 (US)
(74) Representative: Dehns

(57) **Abstract**

The present disclosure provides an inlet assembly for a nacelle. The inlet assembly may comprise an inlet (200), a lip skin (208) coupled to the inlet (200), the lip skin (208) and the inlet (200) forming a duct (224), and an inner duct skin (214) situated between the inlet (200) and the lip skin (208), the inner duct skin (214) separating the duct (224) by defining a first chamber (240) and a second chamber (242).

## Description

### FIELD OF THE DISCLOSURE

The present disclosure relates to anti-icing systems and methods, and more particularly, to anti-icing systems and methods for aircraft nacelles and other aircraft components and surfaces.

### BACKGROUND OF THE DISCLOSURE

Inlets for aircraft nacelles, wing leading edges, horizontal stabilizers, vertical fins, and other aircraft components may be subject to ice-build up during flight. A heat source such as bleed air from a gas turbine engine may be used to heat the components to prevent the ice build-up on such components. However, a large volume of gas turbine engine bleed air may be used in such systems, which can reduce the overall performance of the gas turbine engine.

### SUMMARY OF THE DISCLOSURE

An inlet assembly for a nacelle may comprise an inlet, a lip skin coupled to the inlet, the lip skin and the inlet forming a duct and an inner duct skin situated between the inlet and the lip skin, the inner duct skin separating the duct by defining a first chamber and a second chamber.

In various embodiments, the inlet may comprise an inner barrel, an outer barrel, and a bulkhead surface extending radially between the inner barrel and the outer barrel. The lip skin may comprise a first end, a second end, an interior surface, and an exterior surface, the interior surface coupled to an inner barrel and outer barrel of the inlet. The first chamber may be defined between an interior surface of the lip skin and an outer surface of the inner duct skin. The second chamber may be defined between an exterior surface of the inlet and an inner surface of the inner duct skin. A hot bleed air source may extend through the inlet and the inner duct skin, the hot bleed air source terminating in the first chamber. A hot bleed air source may be configured to supply bleed air to the first chamber and prevent formation of ice on at least a portion of the exterior surface of the lip skin. An interior surface of the inner duct skin may be coupled to the inner barrel and wherein an exterior surface of the inner duct skin is coupled to the lip skin at a first end. The lip skin may comprise a length measured from the first end to the second end. An exterior surface of the inner duct skin may be coupled to the interior surface of the lip skin at a second end, the second end positioned approximately two thirds the length of the lip skin. The interior surface of the inner duct skin may be coupled to the outer barrel and the exterior surface of the inner duct skin may be coupled to the lip skin at a second end.

A nacelle for a gas-turbine engine may comprise an inlet, a lip skin coupled to the inlet, the lip skin and the inlet forming a duct, and an inner duct skin situated between the inlet and the lip skin, the inner duct skin separating the duct by defining a first chamber and a second chamber.

In various embodiments, the nacelle may further comprise a fan cowling coupled to and axially aft of the inlet. The nacelle may further comprise a thrust reverser cowling coupled to and axially aft of the fan cowling. The nacelle may further comprise an exhaust nozzle coupled to and axially aft of the thrust reverser cowling. The inlet, the fan cowling, the thrust reverser cowling, and the exhaust nozzle may be coaxial.

A method of manufacturing an inlet assembly of a nacelle may comprise coupling a lip skin to an inlet such that a duct is formed between the lip skin and the inlet, wherein the lip skin comprises a first end, a second end, an interior surface, and an exterior surface, and the inlet comprises an inner barrel, an outer barrel, and a bulkhead surface extending radially between the inner barrel and the outer barrel, and coupling an inner duct skin to the inlet and the lip skin such that the inner duct skin separates the duct into a first chamber and a second chamber.

In various embodiments, coupling the inner duct skin to the inlet and the lip skin may comprise coupling each end of the inner duct skin between the inlet and the lip skin. Coupling the inner duct skin to the inlet and the lip skin may comprise coupling a first end of the inner duct skin between the inlet and the lip skin and coupling a second end of the inner duct skin to the lip skin. The second end of the inner duct skin may be coupled to the lip skin at a position approximately two thirds a length of the lip skin measured from the first end of the lip skin to the second end of the lip skin.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The accompanying drawings are included to provide a further understanding of the present disclosure and are incorporated in, and constitute a part of, this specification, illustrate various embodiments, and together with the description, serve to explain the principles of the disclosure.
FIG. 1 illustrates a nacelle of an gas turbine engine comprising a segregated anti-ice duct chamber, in accordance with various embodiments;
FIG. 2 illustrates an inlet assembly of a nacelle of a gas turbine engine comprising a segregated anti-ice duct chamber, in accordance with various embodiments;
FIGS. 3A and 3B illustrate various cross-sectional views of inlet lip assemblies comprising segregated anti-ice duct chambers, in accordance with various embodiments; and
FIG. 4 illustrates a method manufacturing an inlet assembly of a nacelle, in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, electrical, and mechanical changes may be made without departing from the spirit and scope of the disclosure. Thus, the detailed description herein is presented for purposes of illustration only and not of limitation.

For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

For example, in the context of the present disclosure, methods, systems, and articles may find particular use in connection with aircraft gas turbine engine anti-ice systems. However, various aspects of the disclosed embodiments may be adapted for performance in a variety of other systems. As such, numerous applications of the present disclosure may be realized.

Various embodiments of the present disclosure may result in more efficient distribution of gas turbine engine bleed air for the purpose of anti-icing applications. Typically, inlets for aircraft leading nacelles, wing leading edges, horizontal stabilizers, vertical fins and other aircraft components may be subject to ice build-up during flight. A heat source may heat the components to prevent ice from building-up on such components. The heat source most commonly used is hot bleed air from a gas turbine engine that heats the backside of the external surface subject to ice build-up. Large volumes of hot bleed air may be used for such anti-icing applications, thereby reducing an overall efficiency associated with the gas turbine engine.

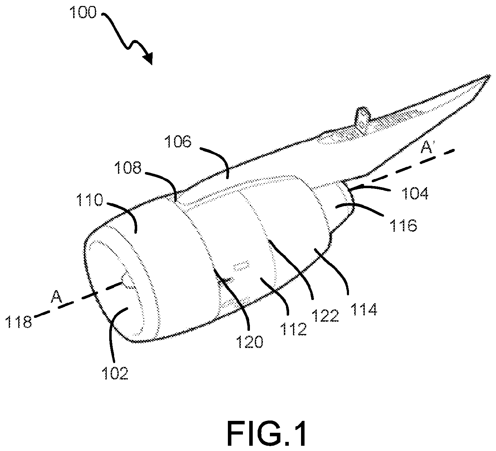

With reference to FIG. 1, a nacelle 100 configured to house a gas turbine engine on an interior surface and provide an aerodynamic outer surface is illustrated, in accordance with various embodiments. The gas turbine engine may be coupled with a fan that is disposed near a front side of the nacelle 100 and configured to draw air into an inlet 102 and expel air through an outlet 104. More specifically, the air drawn through inlet 102 may be expelled through outlet 104 and/or combusted with fuel to provide a forward and/or reverse thrust for an associated aircraft. Nacelle 100 may be coupled to an aircraft by pylon 106 disposed on the upper side of nacelle 100. For example, nacelle 100 can be coupled to an underside of an aircraft wing or to a side of an aircraft fuselage such that the engine provides forward and/or reverse thrust capabilities to the aircraft. Pylon 106 may be coupled to remaining portions of nacelle 100 through top cowling 108.

Still referring to FIG. 1, nacelle 100 may comprise an inlet assembly 110, fan cowling 112, thrust reverser cowling 114, and exhaust nozzle 116. Inlet assembly 110, fan cowling 112, thrust reverser cowling 114, and exhaust nozzle 116 may be annular bodies concentric with engine centerline 118 and coupled together to form nacelle 100. As referred to herein, forward may refer to an area towards a front of the aircraft and aft may refer to an area towards a rear of the aircraft. Axially may refer to a direction along engine centerline 118, with A indicating an axially forward direction and A' indicating an axially aft direction. Radially may refer to any direction perpendicular to the axial direction. Inlet assembly 110 may be positioned axially forward and adjacent to fan cowling 112. Inlet assembly 110 and fan cowling 112 may be coupled at transverse split 120. Fan cowling 112 may be positioned axially forward to and adjacent to thrust reverser cowling 114. Fan cowling 112 and thrust reverser cowling 114 be coupled at transverse split 122. Thrust reverser cowling 114 may be positioned axially forward and adjacent to exhaust nozzle 116. Exhaust nozzle 116 may positioned radially inward relative to thrust reverser cowling 114.

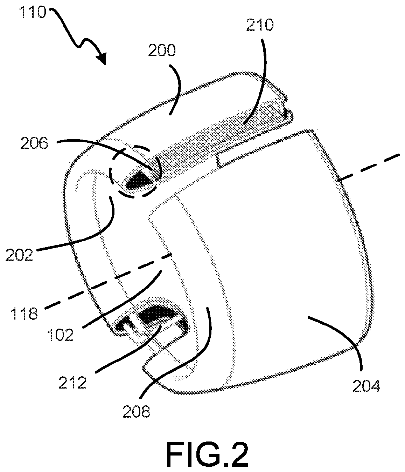

Referring now to FIG. 2, inlet assembly 110 is illustrated separated from the remaining portions of nacelle 100. Inlet 200 may form a portion of an inlet assembly 110 and comprise inner barrel 202, outer barrel 204 radially outward of inner barrel 202, and bulkhead surface 206 extending in a radial direction between inner barrel 202 and outer barrel 204. Inlet assembly 110 may comprise a lip skin 208 disposed at least on a forwardmost surface of inlet assembly 110. Lip skin 208 may diverge in an aft direction toward and be coupled to inner barrel 202 and outer barrel 204. A noise suppressing structure 210 may be positioned between inner barrel 202 and outer barrel 204 and be configured to reduce noise generated by an operating gas turbine engine.

In various embodiments, a hot bleed air source 212 may be positioned between inner barrel 202 and outer barrel 204. Hot bleed air source 212 may collect hot bleed air from a hot air source of the gas turbine engine, such as for example, a compressor discharge bleed air manifold and transport the hot bleed air toward lip skin 208. The hot bleed air may impinge on an interior surface of lip skin 208, thereby heating lip skin 208 and preventing formation of ice. Formation of ice on an exterior surface of lip skin 208 may alter the exterior geometry of lip skin 208, thereby adversely affecting the flow path and quality of air flowing into inlet 102. Hot bleed air source 212 may comprise any suitable anti-icing system, including but not limited to piccolo tube anti-icing systems, swirl anti-ice systems, or others.

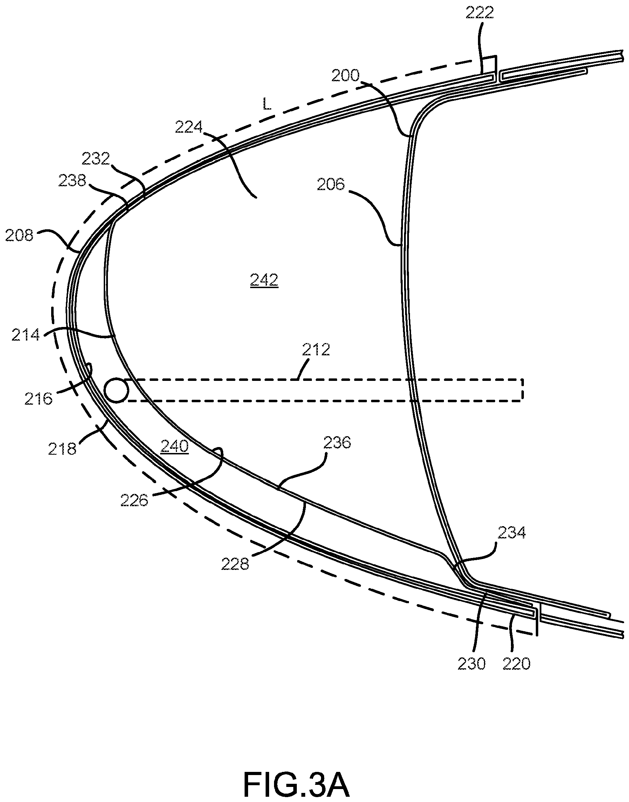

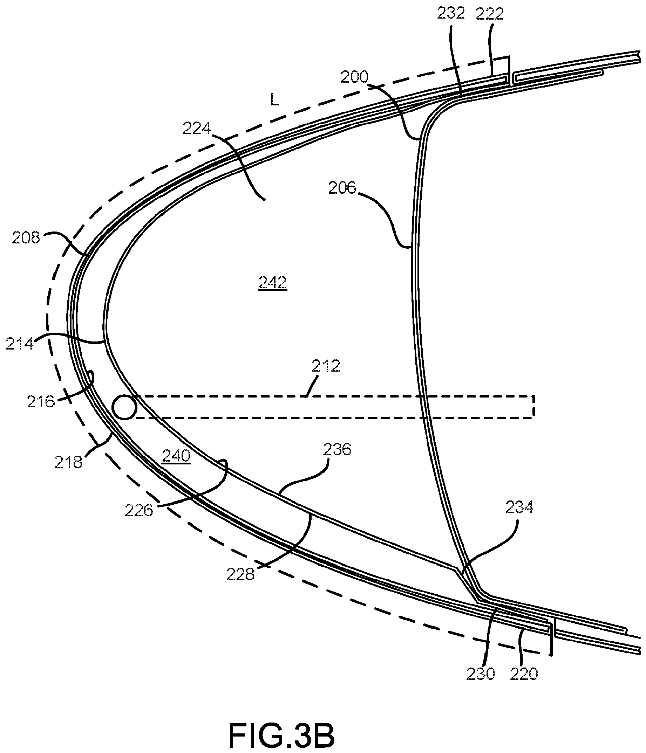

Moving on and with reference to FIG. 3A and 3B, a cross-sectional view of portion of inlet assembly 110 is illustrated, in accordance with various embodiments. Lip skin 208, comprising a substantially parabolic cross-sectional shape may extend circumferentially around a forward portion of inlet assembly 110 to form an aerodynamic surface at a front edge of nacelle 100. While lip skin 208 is illustrated in FIGS. 3A and 3B as a parabolic cross-sectional shape, lip skin 208 is not limited in this regard and may comprise other suitably shaped profiles. Lip skin 208 may comprise an aluminum or aluminum alloy material, however lip skin 208 is not limited in this regard and may comprise any suitable material. Lip skin 208 may comprise an interior surface 216, an exterior surface 218 opposite interior surface 216, a first end 220, and a second end 222 opposite first end 220. Exterior surface 218 of lip skin 208 may be in the direction of oncoming airflow while an aircraft carrying nacelle 100 is in operation. Lip skin 208 may comprise a length measured from first end 220 to second end 222. First end 220 may be positioned radially inward of second end 222 when lip skin 208 is coupled to inlet assembly 110. Together, lip skin 208 and inlet 200 may define a duct 224 configured to contain hot bleed air.

Still referring to FIGS. 3A and 3B, an inner duct skin 214 may be situated between inlet 200 and lip skin 208. Inner duct skin 214 may comprise an aluminum or aluminum alloy material such that inner duct skin 214 comprises a similar coefficient of thermal expansion (CTE) to lip skin 208 and limits additional weight to inlet assembly 110. In various embodiments, inner duct skin 214 may be configured to reduce a volume of hot bleed air associated with heating and prevent ice formation on exterior surface 218 of lip skin 208. For example, hot bleed air source 212 (with momentary reference to FIG. 2) may extend through inlet 200 and through inner duct skin 214 and terminate proximate to lip skin 208. Inner duct skin 214 may comprise an interior surface 226 proximate to inlet 200 and an exterior surface 228 proximate to lip skin 208. In various embodiments, inner duct skin 214 may comprise a first end 230 and a second end 232 opposite first end 230. When inner duct skin 214 is coupled to lip skin 208 and/or inlet 200, first end 230 of inner duct skin 214 may be positioned radially inward of second end 232. For example, in various embodiments, first end 230 of inner duct skin 214 may be coupled to inner barrel 202 of inlet 200 by interior surface 226 and coupled to lip skin 208 by exterior surface 228. In this way, first end 230 of inner duct skin 214 may be coupled directly between inlet 200 and lip skin 208 such that existing designs of inlet 200 and lip skin 208 would have little to no structural modification to incorporate inner duct skin 214.

Referring now specifically to FIG. 3A, inner duct skin 214 may extend in a forward direction and radially inward from a coupling location between lip skin 208 and inlet 200. Inner duct skin 214 may form a ramp 234 between lip skin 208 and inlet 200. Ramp 234 may transition into a curved region 236, which may extend along lip skin 208. Inner duct skin 214 may extend approximately two thirds the length of lip skin 208 and transition into inner duct skin flange 238 adjacent to interior surface 216 of lip skin 208. Inner duct skin flange 238 may be coupled to lip skin 208 utilizing various fastening components and/or techniques including but not limited to rivets, blind rivets, spot welding, and/or other suitable coupling components or techniques. In this way, inner duct skin 214 extending less than an entire length of lip skin 208 may reduce weight associated with inner duct skin 214 and limit application of hot bleed air to areas more likely to accumulate ice, for example, a radially outward portion of lip skin 208.

Referring now to FIG. 3B, in accordance with various embodiments, inner duct skin 214 may extend an entire length of lip skin 208. Second end 232 of inner duct skin 214 may be situated between inlet 200 and lip skin 208. Second end 232 of inner duct skin 214 may be coupled to outer barrel 204 of inlet 200 by interior surface 226 and coupled to lip skin 208 by exterior surface 228. In this way, second end 232 of inner duct skin 214 may be coupled directly between inlet 200 and lip skin 208 such that existing designs of inlet 200 and lip skin 208 would have little to no structural modification to accommodate inner duct skin 214.

With continued reference to FIGS. 3A and 3B, inner duct skin 214 positioned between lip skin 208 and inlet 200 may separate duct 224 into a first chamber 240 and a second chamber 242. First chamber 240 may be defined between exterior surface 228 of inner duct skin 214 and interior surface 216 of lip skin 208. Second chamber 242 may be defined between interior surface 226 of inner duct skin 214 and inlet 200. First chamber 240 may be configured to receive and contain hot bleed air from hot bleed air source 212 (with momentary reference to FIG. 2). First chamber 240 may occupy a smaller volume compared to duct 224. In this way, first chamber 240 may reduce a volume of hot bleed air required to prevent ice formation on outer surface of lip skin 208. The reduced volume of hot bleed air may be utilized in other portions of the gas turbine engine, thereby increasing efficiency of the gas turbine engine. More specifically, by decreasing the cross-sectional area of the hot bleed air flow path, various embodiments of the present system may achieve anti-icing effects associated with other anti-icing systems while utilizing a lower mass of hot bleed air. Hot bleed air source 212 may focus hot bleed air on interior surface 216 of lip skin 208. Heat in interior surface 216 of lip skin 208 may be conducted through lip skin 208 to heat exterior surface 218. Due to the decreased cross-sectional area, the mass flow rate of hot bleed air through first chamber 240 may be, in various embodiments, increased while decreasing the overall mass of hot bleed air used to prevent ice formation on lip skin 208 per given period of time. Accordingly, in various embodiments, inlet assembly 110 comprising inner duct skin 214 may efficiently prevent formation of ice on lip skin 208 while maintaining efficient operation of the gas turbine engine. Furthermore, because bulkhead surface 206 is no longer exposed to hot bleed air, bulkhead surface 206, which typically comprises a composite material, nickel alloy, or a nickel chromium alloy (such as that sold under the mark INCONEL, e.g., INCONEL 600, 617, 625, 718, X-70, and the like), may be replaced with materials such as aluminum or an alloy of the same, which tends to be less expensive than nickel chromium alloys. Accordingly, in various embodiments, inner duct skin 214 may reduce costs and weight compared to nacelles without inner duct skin 214.

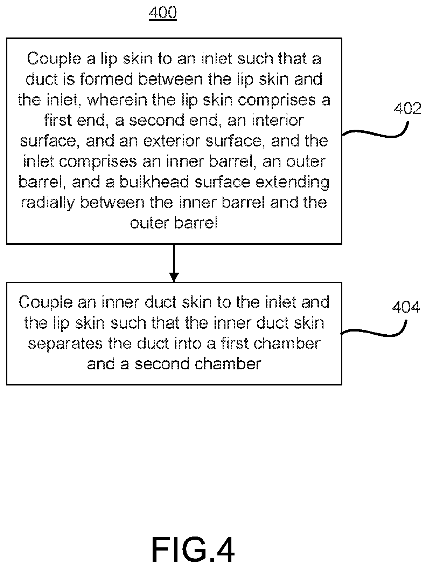

A block diagram illustrating a method 400 of manufacturing an inlet assembly of a nacelle is illustrated in FIG. 4, in accordance with various embodiments. Method 400 may comprise coupling a lip skin to an inlet such that a duct is formed between the lip skin and the inlet, wherein the lip skin comprises a first end, a second end, an interior surface, and an exterior surface, and the inlet comprises an inner barrel, an outer barrel, and a bulkhead surface extending radially between the inner barrel and the outer barrel (step 402). The method may further comprise coupling an inner duct skin to the inlet and the lip skin such that the inner duct skin separates the duct into a first chamber and a second chamber (step 404).

In various embodiments, coupling the inner duct skin to the inlet and the lip skin comprises coupling each end of the inner duct skin between the inlet and the lip skin. Coupling the inner duct skin to the inlet and the lip skin may comprise coupling a first end of the inner duct skin between the inlet and the lip skin and coupling a second end of the inner duct skin to the lip skin. The second end of the inner duct skin may be coupled to the lip skin at a position approximately two thirds a length of the lip skin measured from the first end of the lip skin to the second end of the lip skin.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Methods, systems, and computer-readable media are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An inlet assembly for a nacelle, comprising:
an inlet (200);
a lip skin (208) coupled to the inlet (200), the lip skin (208) and the inlet (200) forming a duct (224); and
an inner duct skin (214) situated between the inlet (200) and the lip skin (208), the inner duct skin (214) separating the duct (224) by defining a first chamber (240) and a second chamber (242).

2. The inlet assembly of claim 1, wherein the inlet comprises an inner barrel (202), an outer barrel (204), and a bulkhead surface (206) extending radially between the inner barrel (202) and the outer barrel (204).

3. The inlet assembly of claim 1 or 2, wherein the lip skin (208) comprises a first end (220), a second end (222), an interior surface (216), and an exterior surface (218), the interior surface (216) coupled to an or the inner barrel (202) and an or the outer barrel of the inlet (204).

4. The inlet assembly of claim 2 or 3, wherein an interior surface (226) of the inner duct skin (214) is coupled to the inner barrel (202) and wherein an exterior surface (228) of the inner duct skin (214) is coupled to the lip skin (208) at a first end (230); and
wherein the interior surface (226) of the inner duct skin (214) is optionally coupled to the outer barrel (204) and wherein the exterior surface (228) of the inner duct skin (214) is optionally coupled to the lip skin (208) at a second end (232).

5. The inlet assembly of claim 3, wherein the lip skin (208) comprises a length measured from the first end (220) to the second end (222); and an exterior surface (228) of the inner duct skin (214) is optionally coupled to the interior surface (216) of the lip skin (208) at a second end (232), the second end (232) optionally positioned approximately two thirds the length of the lip skin (208).

6. The inlet assembly of any preceding claim, wherein the first chamber (240) is defined between an interior surface (216) of the lip skin (208) and an outer surface (228) of the inner duct skin (214).

7. The inlet assembly of any preceding claim, wherein the second chamber (242) is defined between an exterior surface (206) of the inlet (200) and an inner surface (226) of the inner duct skin (214).

8. The inlet assembly of any preceding claim, further comprising a hot bleed air source (212) extending through the inlet (200) and the inner duct skin (214), the hot bleed air source (212) terminating in the first chamber (240).

9. The inlet assembly of claim 7, wherein a hot bleed air source (212) is configured to supply bleed air to the first chamber (240) and prevent formation of ice on at least a portion of the exterior surface (218) of the lip skin (208).

10. A nacelle for a gas-turbine engine, comprising the inlet assembly of any preceding claim.

11. The nacelle of claim 10, further comprising a fan cowling (112) coupled to and axially aft of the inlet.

12. The nacelle of claim 11, further comprising:
a thrust reverser cowling (114) coupled to and axially aft of the fan cowling (112), and optionally an exhaust nozzle (116) coupled to and axially aft of the thrust reverser cowling (114);
wherein, optionally, the inlet, the fan cowling (112), the thrust reverser cowling (114), and the exhaust nozzle (116) are coaxial.

13. A method of manufacturing an inlet assembly of a nacelle, comprising:
coupling a lip skin (208) to an inlet (200) such that a duct (224) is formed between the lip skin (208) and the inlet (200), wherein the lip skin (208) comprises a first end (220), a second end (222), an interior surface (216), and an exterior surface (218), and the inlet comprises an inner barrel (202), an outer barrel (204), and a bulkhead surface (206) extending radially between the inner barrel (202) and the outer barrel (204); and
coupling an inner duct skin (214) to the inlet (200) and the lip skin (208) such that the inner duct skin (214) separates the duct (224) into a first chamber (240) and a second chamber (242).

14. The method of claim 13, wherein coupling the inner duct skin (214) to the inlet and the lip skin (208) comprises coupling each end of the inner duct skin (214) between the inlet (200) and the lip skin (208).

15. The method of claim 13, wherein coupling the inner duct skin (214) to the inlet (200) and the lip skin (208) comprises coupling a first end (230) of the inner duct skin (214) between the inlet (200) and the lip skin (208) and coupling a second end (232) of the inner duct skin (214) to the lip skin (208),
wherein the second end (232) of the inner duct skin (214) is coupled to the lip skin (208) at a position approximately two thirds a length of the lip skin (208) measured from the first end (220) of the lip skin (208) to the second end (222) of the lip skin (208).
